# EUROPEAN PATENT APPLICATION

(11) **EP 4 231 154 A1**
(43) Date of publication of application: **23.08.2023**
(21) Application number: 22156985.8
(22) Date of filing: 16.02.2022
(51) Int. Cl.: G06F 11/34, G06F 30/27, G06F 11/36, G06N 3/08

(54) **METHOD FOR PROVIDING A TRAINING DATASET FOR TRAINING AND/OR TESTING A MACHINE LEARNING MODEL, METHOD FOR TRAINING A MACHINE LEARNING MODEL, AND METHOD FOR PREDICTING TIMING AND/OR RESOURCE REQUIREMENTS OF AN UNKNOWN APPLICATION RUNNING ON AN ELECTRONIC DEVICE**

(71) Applicant: ABB SCHWEIZ AG, 5400 Baden (CH)
(72) Inventor: SIVANTHI, Thanikesavan, 5303 Würenlingen (CH); RUEETSCHI, Andrea, 5405 Baden (CH); SCHEUSS, Oliver, 8046 Zürich (CH); HUANG, Pengcheng, 8006 Zürich (CH); GIANNOPOULOU, Georgia, 8049 Zürich (CH)
(74) Representative: Qip Patentanwälte Dr. Kuehn & Partner mbB

(57) **Abstract**

A method for providing a training dataset for training and/or testing a machine learning model (20) for predicting timing and/or resource requirements of an unknown application (52) running on an electronic device is provided. The method comprising: providing a training module configured for showing a behaviour as a predetermined electronic device; obtaining a plurality of representative applications (26), which are known and configured to run on the electronic device; running the plurality of representative applications (26) on the training module; recording at least one value of at least one performance metric for each of the representative applications (26) when running on the training module; extracting at least one feature from the representative applications (26); and associating the extracted features, the corresponding recorded values of the performance metric and the corresponding performance metrics in the training dataset; and providing the dataset for training and/or testing the machine learning model (20).

## Description

### FIELD OF THE INVENTION

The invention relates to the field of electronic devices. In particular, the invention relates to a method for providing a training dataset for training and/or testing a machine learning model, a method for training the machine learning model, and a method for predicting timing and/or resource requirements of an unknown application running on an electronic device, in particular by using the machine learning model. The invention further relates to computer programs corresponding to the methods, and to computer-readable media in which the corresponding computer programs are stored.

### BACKGROUND OF THE INVENTION

There is an increasing tendency to leverage an underlying software, as well as corresponding hardware resources, of an existing industrial automation and control system (IACS) platform (herein also referred to as "electronic device"), to build and co-host new applications, e.g. add-on applications and/or real-time applications, which may be unknown at the time at which the electronic device is developed, manufactured, and/or released. Nowadays, software and/or hardware sharing enables more efficient resource utilization, reduced cost and volume for hardware, shorter development cycles and thus time to market. The real-time applications which are added to an existing IACS often run in an isolated and secure environment, such as a process, a virtual machine, or an operating system container, and may be developed by different entities, e.g., a platform vendor, a system integrator, a customer, or any third party. An entity developing such an application must ensure that the application meets its timing requirements without affecting the timing requirements of other applications that may already run on that electronic device. This is extremely challenging as the runtime behavior of the other applications on the electronic device is not fully known.

The state-of-practice in the corresponding industry is to deploy the new applications on the target platform, i.e., the electronic device, and validate their timing requirements using for example Hardware-In-Loop (HIL) setups. This effort is typically based on long-term performance monitoring of the deployed system to identify the worst-case timing behavior of the new application. This practice may be time-consuming, costly, and not suitable for quickly obtaining validation feedback during incremental code changes.

### DESCRIPTION OF THE INVENTION

Therefore, it is an objective of the present invention to provide a method for providing a training dataset for training and/or testing a machine learning model for predicting timing and/or resource requirements of an unknown application running on an electronic device, wherein the method may be carried out easily and/or quickly, and/or may contribute to an accurate prediction of the timing and/or resource requirements of the unknown application running on an electronic device by the machine learning model.

It is an objective of the present invention to provide a method for training the above machine learning model for predicting the timing and/or resource requirements of the unknown application running on an electronic device, wherein the method may be carried out easily and/or quickly, and/or may contribute to an accurate prediction of the timing and/or resource requirements of the unknown application running on an electronic device by the machine learning model.

It is an objective of the present invention to provide a method for predicting timing and/or resource requirements of the unknown application running on an electronic device. wherein the method may be deployed onto a shared platform, wherein the method enables a developer of the new software and the owner of the platform to operate on a shared platform without revealing the source code of the new application and, respectively, of the platform code, wherein the method may provide an early indicator on a feasibility, without the time-consuming step of deploying and testing the new application on the platform, and thereby may facilitate a fast integration of real-time applications into shared platforms. Prediction metrics may also enable application developers to identify an optimal configuration of IACS parameters, or of other applications running on it, at an early stage of their efforts.

Further, next-generation electronic devices and platforms may enable to run customer, or third-party, real-time applications in an isolated and secure environment. Those solutions may be realized using, for example, a software thread or process, a virtual machine, or an operating system container. The new applications, real-time as well as non-real-time, or mix of both may be validated with respect to the timing and resource requirements early in their development cycle to avoid costly redesigns, while ensuring the privacy of the source codes between the parties involved, wherein "privacy" means in this context that the source code of the new application need not to be revealed. To this end, a prediction framework that may help developers to understand and validate timing and resource guarantees would be beneficial. Such a framework may be embedded into a development environment of the new applications for analyzing their timing and resource usage.

It is another objective of the present invention to provide one, two or more computer programs configured for carrying out one, two or, respectively, more of the above methods, and/or computer-readable media, on which the corresponding computer programs are stored.

These objectives are achieved by the subject-matter of the independent claims. Further exemplary embodiments are evident from the dependent claims and the following description.

In particular, an objective of the present invention is achieved by a method for providing a training dataset for training and/or testing a machine learning model for predicting timing and/or resource requirements of an unknown application running on an electronic device, the method comprising: providing a training module configured for showing a behaviour as a predetermined electronic device; obtaining a plurality of representative applications, which are known and configured to run on the electronic device; running the plurality of representative applications on the training module; recording at least one value of at least one performance metric for each of the representative applications when running on the training module; extracting at least one feature from the representative applications; and associating the extracted features, the corresponding recorded values of the performance metric and the corresponding performance metrics in the training dataset; and providing the dataset for training and/or testing the machine learning model.

Another objective of the present invention is achieved by a method for training the machine learning model for predicting timing and/or resource requirements of the unknown application running on the electronic device, the method comprising: providing the above training dataset for training and/or testing the machine learning model, the dataset comprising extracted features, recorded values of performance metrics and corresponding performance metrics associated with each other; and training the machine learning model by the dataset.

Another objective of the present invention is achieved by a method for predicting timing and/or resource requirements of the unknown application running on the electronic device, the method comprising: extracting at least one feature from the unknown application; inputting the extracted feature in the machine learning model trained in correspondence with the above method for training the machine learning model; and predicting the timing and/or resource requirements of the unknown application by the machine learning model.

Another objective of the present invention is achieved by using the above machine learning model trained for predicting timing and/or resource requirements of the unknown application running on the electronic device.

Another objective of the present invention is achieved by a computer program for providing the training dataset for training and/or testing a machine learning model for predicting timing and/or resource requirements of the unknown application running on the electronic device, which computer program when being executed by a processor, is adapted for performing the above method for providing the training dataset.

Another objective of the present invention is achieved by a computer-readable medium in which the computer program for providing the training dataset is stored.

Another objective of the present invention is achieved by a computer program for training the machine learning model for predicting timing and/or resource requirements of the unknown application running on the electronic device, which computer program when being executed by a processor, is adapted for performing the method for training the machine learning model.

Another objective of the present invention is achieved by a computer-readable medium in which the computer program for performing the method for training the machine learning model is stored.

Another objective of the present invention is achieved by a computer program for predicting timing and/or resource requirements of the unknown application running on the electronic device, which computer program when being executed by a processor, is adapted for performing the above method for predicting timing and/or resource requirements of an unknown application running on an electronic device.

Another objective of the present invention is achieved by a computer-readable medium in which the above computer program for predicting timing and/or resource requirements of the unknown application running on the electronic device is stored.

The predetermined electronic device may correspond to the electronic device for which the timing and/or resource requirements of the unknown application running on the corresponding electronic device should be predicted, in particular if only one training module is used. In other words, the training module may be configured for showing the same behaviour as the electronic device for which the timing and/or resource requirements of the unknown application running on the corresponding electronic device should be predicted. The electronic device may be or may comprise a controller, a sensor, and/or an actor.

The plurality of representative applications may be obtained from other applications that may already run on that electronic device, historical data, benchmark suites, domain knowledge, and/or past builds and tests of applications, applications that are based on real-world use cases or on expert knowledge on how the device will be used in different scenarios. This representative set of applications and optionally their individual configurations may be used to reflect the characteristics of the unknown application, because the known applications coming up in the future that will run on the platform and their configurations (e.g., deadlines and/or priorities) are not necessarily known beforehand. These representative sets of applications, and their configurations, along with the platform code, may be used to train the supervised machine learning model, that predicts the timing and resource utilization of the unknown application, which may be already under development or which may be completely unknown at the time the machine learning model is trained.

The at least one feature may be extracted from the representative applications by automatically analysing the representative applications and/or by simulating the representative application on a simulator which is independent from the electronic device. Alternatively or additionally, the at least one feature may be extracted from the representative applications by running the plurality of representative applications on the training module. The training module may emulate the behavior of the electronic device when operated by the unknown application.

A part of the training dataset may be used for the training and the rest of the training dataset may be used for the testing of the machine learning model. For example, 70%, 80% or 90% of the training dataset may be used for the training.

The prediction framework embodied by the above methods may work without the full knowledge of the proprietary code of the unknown application. Therefore, the IACS platform, i.e. the electronic device, may host multiple proprietary applications, including that of the platform itself, e.g. the operating system, firmware, communication drivers, baseline software. The entity performing the prediction, e.g. a general purpose computer on which the machine learning model is implemented, may deal with datasets, generated by simulations, by profiling, by a code analysis of the unknown applications under development, or by a combination of those. This may be accomplished by using platform-independent system simulators and/or code analysis tools, as for example static analysis, platform independent intermediate representation, performance counters, QEMU/gem5 emulators. This contributes to that the data may remain statistically invariant against changes in the underlying computing infrastructure support of those tools. The code analysis, may be performed statically, on the binary and/or the source code files. The code analysis may provide an intermediate representation that may include count and style attributes of the code, such as, the number of arithmetic operations, function calls or code lines. The framework may be flexible enough to cope with diverse datasets by extracting and aggregating the useful features during both training and inference stages.

A service provider, who may be an owner or developer of the IACS platform, i.e. the electronic device, or a third-party may be responsible to train the machine learning model for the customer who buys or already has the electronic device, for a system integrator, or for another third party.

According to an embodiment, the training module may be a hardware module corresponding to the electronic device or similar to the electronic device, or a software module for simulating the behaviour of the electronic device, or a combination of the hardware and software modules. If the hardware module is used as the training module, the results achieved by the training module are very realistic and reliable. This contributes to a very accurate training of the machine learning model. The device similar to the electronic device may be a hardware module that has a behaviour close to that of the target platform, i.e., the electronic device, in particular in terms of performance and memory, CPU & cache architecture. For example, the device similar to the electronic device may comprise the same or an equivalent CPU, the same or an equivalent memory, etc. For example, the device similar to the electronic device may be a single-board computer.

According to an embodiment, the plurality of representative applications run on the training module one after the other and/or at least some of the representative applications run on the training module simultaneously. For example, if two or more of the representative applications run simultaneously on the training module, this may contribute to learn something about the interaction and/or mutual influences between the corresponding representative applications. This is particularly advantageous, if one of the representative applications is a firmware of the electronic device.

According to an embodiment, one of the representative applications is a firmware for the electronic device, e.g. an operating system of the electronic device. This may contribute to a very reliable training of the machine learning model, because in the most cases there will be any firmware on the electronic device and because in those cases there is always any interaction and/or mutual influence between the application running on the electronic device and the firmware of the electronic device.

According to an embodiment, the features extracted from the representative applications may be extracted at least in part from the corresponding algorithms, program codes, and/or binary codes of the corresponding representative applications. That the features extracted from the representative applications comprise "at least in part" the algorithms, the program codes, and/or the binary codes of the corresponding representative applications, may mean that the features extracted from the representative applications may be extracted from the whole algorithms, program codes, and/or the binary codes of the corresponding representative applications or only from some lines of the algorithms, the program codes, and/or the binary codes of the corresponding representative applications. The may comprise one or more elements from a group of count attributes and/or style attributes of the corresponding algorithm, program code and/or, respectively, binary code. The features extracted from the representative applications may comprise count attributes and/or style attributes may comprise one or more elements from a group of a number of arithmetic operations, a number of function calls and/or a number of code lines of the corresponding algorithm, program code and/or, respectively, binary code.

According to an embodiment, the method comprises the step of determining at least one property of each of the representative applications by analysing the representative applications, wherein the features extracted from the corresponding representative applications comprise the determined properties. The property of the representative application may comprise one or more elements from a group of count attributes and/or style attributes of the corresponding algorithm, program code and/or, respectively, binary code. The count attributes and/or style attributes may comprise one or more elements from a group of a number of arithmetic operations, a number of function calls and/or a number of code lines of the corresponding algorithm, program code and/or, respectively, binary code.

According to an embodiment, the representative applications are analysed by analysing the algorithm, the program code and/or the binary code of the corresponding representative application.

According to an embodiment, at least one of the plurality of representative application comprises at least two different configurations, each configuration being characterized by at least one configuration parameter; the corresponding representative application is run on the training module at least two times; and each time the corresponding representative application is run on the training module, the corresponding representative application is run with another configuration. The developer of the unknown application may tune the configuration parameters, whose changes are reflected in the generated results and, ultimately, in the predicted performance. For example, there are two different processes and/or entities which may be controlled by the representative application running on the electronic device, wherein one of the processes is controlled by the representative software having a first configuration and the other process is controlled by the representative application having a second configuration. Running one representative application several times with each time using a different configuration may increase the amount of training material, because the representative software having the first configuration may be regarded as another representative application as the representative application having the second configuration. So, by altering the configuration, the amount of representative application for providing the dataset may be easily increased. This may contribute to a very accurate machine learning model.

According to an embodiment, the method comprises the step of determining at least one of the configuration parameters of the configuration of each of the representative application by analysing the representative application, wherein the features extracted from the representative application comprise the corresponding determined configuration parameters.

According to an embodiment, the method comprises the steps of: providing at least one other training module configured for showing a behaviour as another corresponding electronic device; running the plurality of representative applications on the other training module; recording at least one value of at least one performance metric for each of the representative applications when running on the other training module; extracting at least one feature from the training module and the other training module; associating the extracted features, the corresponding recorded values of the performance metric and the corresponding performance metrics in the training dataset; and providing the dataset for training and/or testing the machine learning model. The training module and the other training module may belong to the same product class as the electronic device for which the timing and/or resource requirements of the unknown application running on the electronic device shall be predicted. For example, the product class may be controller, sensor, actor, or a combination of those.

According to an embodiment, the performance metric may comprise response times, CPU utilizations, and/or memory utilizations of the corresponding representative application.

According to an embodiment, the extracted features are used as inputs for the training; the performance metrics are used as labels for the training; and the correspondingly recorded values of the features and the labels are used as teaching vector during the training. The recorded values may define or may be entries in a table comprising columns for the features and columns for the labels.

According to an embodiment, the machine learning model is a supervised machine learning model. Correspondingly, the training corresponds to supervised learning.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows a flow diagram of an exemplary embodiment of a method for providing a training dataset for training and/or testing a machine learning model for predicting timing and/or resource requirements of an unknown application running on an electronic device.
Fig. 2 schematically shows a block diagram illustrating an exemplary embodiment of a method for training the machine learning model for predicting timing and/or resource requirements of the unknown application running on an electronic device.
Fig. 3 schematically shows a block diagram illustrating an exemplary embodiment of a method for predicting timing and/or resource requirements of the unknown application running on an electronic device.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

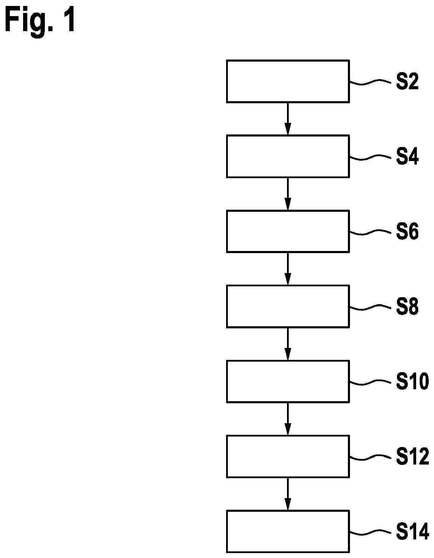

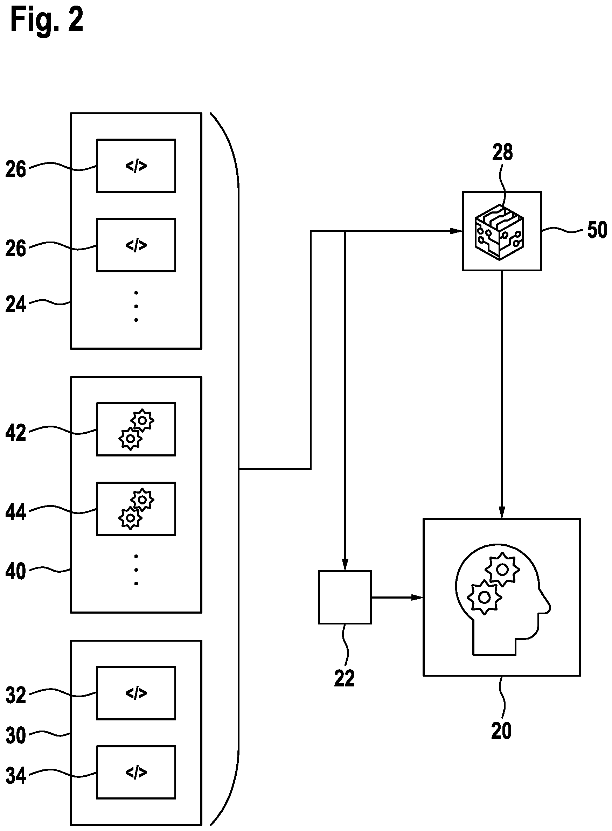

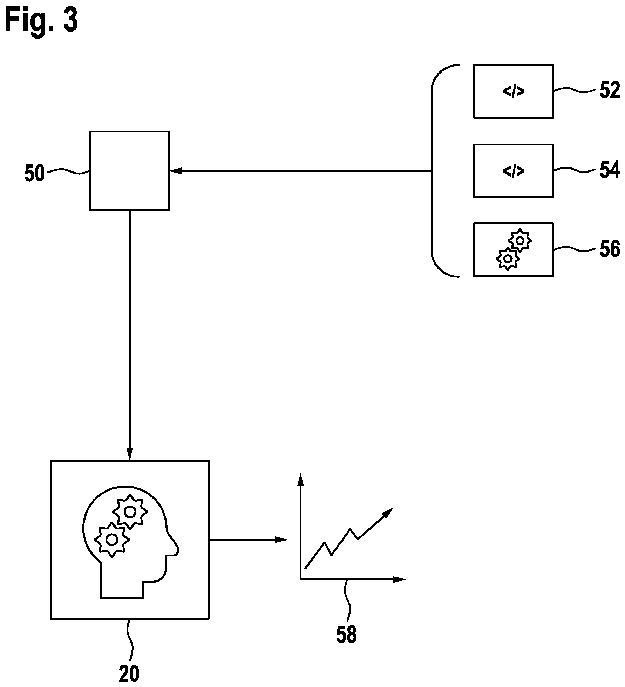

Fig. 1 schematically shows a flow diagram of an exemplary embodiment of a method for providing a training dataset for training and/or testing a machine learning model 20 (see figure 2) for predicting timing and/or resource requirements of an unknown application 52 (see figure 3) running on an electronic device. Although the flow diagram is illustrated in a sequential manner, some or all of the steps may be carried out two or more times, e.g. iteratively. Further, the following steps may be repeated for individual training modules, if a model per electronic device is required.

In step S2 the method may be started, wherein variables may be initialised in step S2. Further, in step S2, a training module configured for showing a behaviour as a predetermined electronic device may be provided. The training module may be a hardware module 22 (see figure 2) corresponding to the predetermined electronic device or similar to the predetermined electronic device, or a software module 28 (see figure 2) for simulating the behaviour of the predetermined electronic device. The predetermined electronic device may correspond to the electronic device for which the timing and/or resource requirements of the unknown application running on the corresponding electronic device should be predicted, in particular if only one training module is used. The predetermined electronic device may be referred to as target platform.

In step S4, a plurality of representative applications 26 (see figure 2), which are known and configured to run on the electronic device, may be obtained. For example, one of the representative applications 26 may be a firmware 32 (see figure 2) for the electronic device. The plurality of representative applications 26 may be obtained from historical data, benchmark suites, domain knowledge, past builds and tests of applications, applications that correspond to real-world uses cases, and/or based on expert knowledge on how the device will be used in different scenarios.

In step S6, the plurality of representative applications 26 are run, in other words carried out, on and/or by the training module. The plurality of representative applications 26 may run on the training module one after the other. Alternatively, at least some of the representative applications 26 may run on the training module simultaneously. In the latter case, the training dataset may comprise data which reflect the behaviour of the predetermined electronic device when multiple applications run on it simultaneously.

Optionally, one, two or more of the plurality of representative applications 26 may comprise at least two different configurations 42, 44 (see figure 2). The corresponding representative application 26 may be run on the training module at least two times. Each time the corresponding representative application 26 is run on the training module, the corresponding representative application 26 may be run with another configuration 42, 44. In other words, the representative applications 26 may be carried out more than once while using the different configurations 42, 44 each time they are carried out. Each of the configurations 42, 44 may be characterized by at least one configuration parameter.

In step S8, at least one value of at least one performance metric may be recorded for each of the representative applications 26 when running on the training module. The performance metric may be at least one out of a group performance metrics. The group may comprise response times, CPU utilizations, and memory utilizations of the corresponding representative application 26. Running the representative applications 26 on the training module and recording at least one value of at least one of the performance metrics for each of the representative applications 26 may be referred to as dynamic analysis.

In step S 10, at least one feature may be extracted from the representative applications 26. The features may be extracted by an automated analysis of the source code without executing the application using static analysis tools, or by compiling the code to a platform-independent intermediate representation. For a binary code, the features may be extracted by performance counters collected during execution, which may be CPU hardware registers that count hardware events such as instructions executed, cache-misses suffered, branches, and/or timing on the general-purpose computer. The features extracted from the representative applications 26 may be extracted at least in part from the algorithms, the program codes, and/or the binary codes of the corresponding representative applications 26. For example, the features extracted from the corresponding representative applications 26 may comprise one, two or more properties of each of the representative applications 26. The properties may be determined by analysing the representative applications 26. The representative applications 26 may be analysed by analysing the algorithm, the program code and/or the binary code of the corresponding representative application 26. This procedure may be referred to as static analysis.

If the representative applications are run more than once while using different configurations in above step S6, in step S 10 at least one of the configuration parameters of the configuration 42, 44 of each of the representative applications 26 may be determined by analysing the representative application 26. The features extracted from the representative application 26 then may comprise the corresponding determined configuration parameters.

In step S12, the extracted features, the corresponding recorded values of the performance metric and the corresponding performance metrics may be associated with each other in the training dataset. For example, the training dataset may be embodied by a digital table. The digital table may comprise n columns, with n being a natural number and with each column comprising several fields, wherein the digital table may comprise the features as n-x columns, x being a natural number, the performance metrics as the labels in the remaining x columns, and the recorded values of the features and performance metrics as entries within fields of the corresponding columns.

In step S14, the dataset for training and/or testing the machine learning model 20, i.e. the training dataset, may be provided for training and/or testing the machine learning model 20, e.g. as explained with respect to figure 2.

As an alternative option for providing the training dataset and/or as an extension of the above method, at least one other training module configured for showing a behaviour as another corresponding electronic device may be provided in addition to the above training module, e.g. in step S2 or corresponding to step S2. The other training module may be configured to emulate the behaviour of the other electronic device. So, the training dataset may not be limited to one training module and thereby not to one electronic device only. Then, the plurality of representative applications 26 may run on the other training module, e.g. in step S6 or corresponding to step S6. At least one value of at least one performance metric may be recorded for each of the representative applications 26 when running on the other training module, e.g. in step S8 or corresponding to step S8. Afterwards, at least one feature may be extracted from the training module 20 and the other training module, e.g. in step S10 or corresponding to step S10. The extracted features may be associated with the corresponding recorded values of the performance metric and the corresponding performance metrics in the training dataset, e.g. in step S12 or corresponding to step S12. In the result, the dataset for training and/or testing the machine learning model 20 is provided, wherein the trained machine learning model 20 then may be capable to predict the behaviour of the unknown application on an unknown electronic device, e.g. in step S14 or corresponding to step S14.

Fig. 2 schematically shows a block diagram illustrating an exemplary embodiment of a method for training the machine learning model 20 for predicting timing and/or resource requirements of the unknown application 52 running on an electronic device.

In particular, figure 2 shows an application set 24, i.e. a set of known applications, also referred to as representative applications 26. The representative applications 26 are already known for running on the electronic device.

The representative applications 26, e.g. application code for each of the representative applications, may be provided to the training module. The training module may be or may comprise a hardware module 22 corresponding to the electronic device or similar to the electronic device, or a software module 28 for simulating the behaviour of the electronic device, or a combination of the hardware module 22 and the software module 28. In other words, the machine learning model 20 may be trained by the hardware module 22 and/or the software module 28. So, the representative applications 26 may be provided to the hardware module 22.

Further, a platform code 30 may be provided to the hardware module 22. The platform code 30 may comprise one, two or more firmwares 32, e.g. motor control software, Open Process Communication Protocol Unified Architecture (OPC UA) server software, or grid control software, of the electronic device. Alternatively, the one, two or more firmwares 32 of the electronic device may be handled as one, two or, respectively, more of the representative applications 26. The platform code 30 may also comprise information about the infrastructure 34. The infrastructure 34 may comprise known software which may run on the electronic device, e.g. an operating system, one or more drivers, e.g. communication drivers, any other software providing a standard functionality to the electronic device, a sandbox engine for running additional (sandboxed) applications, and/or control and/or power hardware, e.g. emulated.

Optionally, a configuration set 40 may be provided to the hardware module 22. The configuration set 40 may comprise several different configurations under which the corresponding representative applications 26 may run on the electronic device. For example, the configurations may comprise a first configuration 42 and a second configuration 44. The first and second configuration 42, 44 may differ from each other by comprising at least one configuration parameter which is different in the first configuration 42 as in the second configuration 44. The configurations 42, 44 may be inputted as inputs into the training module.

The application codes or binaries of the representative applications 26, the configurations 42, 44, and/or the device code 30 may also be provided to the software module 28 running on a general-purpose computer 50. The software module 28 may be or may comprise a simulator for emulating the behaviour of the electronic device and/or a analysing tool for analysing the application codes or binaries. The general-purpose computer 50 may extract features from the representative applications 26 by analysing the corresponding application code 28 by an analysing tool, e.g. an analysing software, and/or by simulating the behaviour the electronic device when one of the representative applications 26 is running on the electronic device. The extracted features may be a number of code lines, a number of arithmetic instructions to be executed, and/or a predicted number of cache fetches/misses. The features may be extracted by using an analysis of the binary code of the electronic device, or profiling analysis of simulated code (e.g. using instrumentation or hardware simulation). The analysing tool and/or the simulator may for example usea static code analysis, a platform independent intermediate representation, performance counters, QEMU/gem5 emulators, and/or code profilers by running natively on the general-purpose computer. The extracted features may be used as inputs for training the machine learning model. The performance metrics may be used as labels for training the machine learning model. The recorded values may be used as teaching vector during the training. The machine learning model 20 may be a supervised machine learning model 20. The training may be referred to as supervised learning.

The extracted features, the performance metrics, and the recorded values form the training dataset for training and/or testing the machine learning model. The training dataset may be obtained by the method explained with respect to figure 1. The training dataset may be used for training the machine learning model as explained with respect to figure 2. Optionally, a part of the training dataset, e.g. 10%, 20%, or 30% of the training dataset may be used not for training, but for testing the machine learning model after it has been trained by the rest of the training dataset.

Fig. 3 schematically shows a block diagram illustrating an exemplary embodiment of a method for predicting timing and/or resource requirements of the unknown application 52 running on the electronic device.

For predicting the timing and/or resource requirements of the unknown application 52 at least one feature may be extracted from the unknown application 52, e.g. by the general purpose computer. The features may be extracted from the unknown application 52 by the same simulator and/or analysing tool running on the general-purpose computer 50, as explained above with respect to figure 2 and the representative applications 26. Additionally, the analysis and/or simulation of the unknown application 52 may be carried out together with an existing application 54, optionally with a third configuration 56, in order to retrieve some information about mutual influences of the unknown application 52 and the existing application 54.

The extracted feature may be inputted in the trained machine learning model 20, e.g. trained as explained with respect to figure 2.

The trained machine learning model 20 then may make a prediction 58 of the timing and/or resource requirements of the unknown application 52 only, or of the unknown application 52 running together with the existing application 54, optionally with the third configuration 56. In other words, the machine learning model 20 trained in correspondence with figure 2 may be used for predicting timing and/or resource requirements of an unknown application 52 running on an electronic device.

It has to be noted in this context that the term "unknown application" in this description is used for describing an application which is unknown at the time the electronic device is designed and/or at the time of training the machine learning model 20. At the time of making the prediction 58, the application code and/or code binaries of the unknown application 52 may be known in order to be able to feed it into the general purpose computer 50 and/or the machine learning model 20.

The above method for providing the training dataset, the method for training and/or testing the machine learning model 20, and/or the method for predicting the timing and/or resource requirements of the unknown application 52 running on the electronic device, each may be embodied as an induvial computer program. The corresponding computer program may be configured, when being executed by a processor, for performing the corresponding method. Each of the computer programs may be stored on a computer-readable medium.

So, by the above methods, firstly the supervised machine learning model 20 is built that is trained on the training dataset. The machine learning model 20 may be generated based on various algorithms, for instance utilizing statistical regression or neural networks. Then, the machine learning model 20, in particular running on the general-purpose computer 50, may be used to predict the timing and resource utilization of the unknown application 52 only, or of the unknown application 52 running together with the existing application 54, optionally with the third configuration 56. Figures 2 and 3 depict a high-level overview of the framework for predicting the timing and resource usage of isolated, co-located, real-time, or non-real-time applications that run on a shared IACS platform, e.g. the electronic device. The framework uses the supervised machine learning model 20 that is trained with the features, extracted from datasets, which are obtained from either one or combination of the following:
- a dynamic code analysis (or measurements), where the effects of the sets of representative applications 26, optionally with the configurations 42, 44 and/or the device code 30, e.g. the firmware 32 or infrastructure 34, may be simulated on a platform-independent infrastructure, to emulate the behaviour of the unknown applications 52 on the target platform.
- a static code analysis, where the features of the training set correspond to platform-independent software profiles of the representative applications 26, device code 30, e.g. the firmware 32 and the infrastructure 34, and optionally their "representative" configurations 42, 44.

The dynamic analysis consists of running the representative applications 26 on the platform-independent simulator, e.g. on the general purpose computer 50. The simulator and the target platform, or code, may include a digital-twin representation of the plant models that the IACS is supposed to control once being deployed in the field. Therefore, the set of configurations, e.g. the configuration database 40, may also be provided to parameterize them accordingly while testing supported modes and operating points.

Training datasets from the platform-independent environment, e.g. on the general purpose computer 50, do not depend on the underlying computing infrastructure, like the hardware and firmware of a local or a remote server that hosts them. Virtual platforms that emulate, or abstract, the target hardware and runtime layers would ensure that independency. In case of platform-specific features, such features or data may be extracted across a set of common platforms. This enables platform vendor and the customer to obtain the data on demand and customize the prediction model

One example of a platform-independent static analysis may consist of extracting a dependency graph of the unknown applications 52 from either, the source code or the compiled binaries, by specialized software tools that may retrieve these properties.

The labels of the training dataset may correspond to the performance metrics, e.g. the response times, the CPU utilization, and/or the memory utilization, obtained by running the representative applications 26, e.g. along with the existing applications 54, optionally under different representative configurations, e.g., the configurations 42, 44, on the training module. The machine learning model 20 obtained may then be used in the development environment to infer the timing and resource utilization of a new, previously unknown application 52. The inputs to the machine learning model may be the features extracted from the analysis and simulation of the unknown application 52, and those of the existing applications 54, optionally all or some of them being based on a "given" configuration, e.g., the third configuration 56.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims.

For example, the machine learning model 20 may be continuously updated with the data obtained from the actual validation of unknown applications 52 on the target platform, as soon as they are known and/or as soon as their features are extracted. Further, the framework may be easily extended to multiple targets by being performed on multiple targets, as described above with respect to the other training module and/or the other electronic device, and by using the target information as an additional input for the prediction. Further, a user, e.g., the customer, may engage with the service provider on specific configuration files for tuning the platform code and for training the machine learning model 20. The platform owner may choose to either deliver a single trained model, that captures the behaviour of multiple configurations, or multiple models, each trained for a specific configuration. Further, the user may engage in different ways with the platform owner by either providing datasets, e.g. the application sets 24 and/or the configuration sets 40, or the device codes 30, e.g. binaries or the source code. The customer may choose the latter, for instance, when requesting the platform owner to identify a suitable configuration for running the unknown application 52.

The framework described in figures 2 and 3 describes a tool for application-level development in possibly mixed-criticality, and containerized, real-time systems. The same concept also applies at a lower level, that is, during the development of a real-time process, where the customer code is embedded in pre-allocated threads, and with other threads occupied by the platform code.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 20: machine learning model
- 22: hardware module
- 24: application set
- 26: representative application
- 28: software module
- 30: device code
- 32: firmware
- 34: infrastructure
- 40: configuration set
- 42: first configuration
- 44: second configuration
- 50: general purpose computer
- 52: unknown application
- 54: existing application
- 56: third configuration
- 58: prediction
- S2-S14: steps two to fourteen

## Claims

1. Method for providing a training dataset for training and/or testing a machine learning model (20) for predicting timing and/or resource requirements of an unknown application (52) running on an electronic device, the method comprising:
providing a training module configured for showing a behaviour as a predetermined electronic device;
obtaining a plurality of representative applications (26), which are known and configured to run on the electronic device;
running the plurality of representative applications (26) on the training module;
recording at least one value of at least one performance metric for each of the representative applications (26) when running on the training module;
extracting at least one feature from the representative applications (26);
associating the extracted features, the corresponding recorded values of the performance metric and the corresponding performance metrics in the training dataset; and
providing the dataset for training and/or testing the machine learning model (20).

2. Method in accordance with claim 1, wherein
the training module is a hardware module (22) corresponding to the electronic device or similar to the electronic device, or a software module (28) for simulating the behaviour of the electronic device, or a combination of the hardware module (22) and the software module (28).

3. Method in accordance with one of the preceding claims, wherein
the plurality of representative applications (26) run on the training module one after the other and/or at least some of the representative applications (26) run on the training module simultaneously.

4. Method in accordance with one of the preceding claims, wherein
one of the representative applications (26) is a firmware (34) for the electronic device.

5. Method in accordance with one of the preceding claims, wherein
the features extracted from the representative applications (26) are extracted at least in part from the algorithms, the program codes, and/or the binary codes of the corresponding representative applications (26).

6. Method in accordance with one of the preceding claims, comprising the step of
determining at least one property of each of the representative applications (26) by analysing the representative applications (26), wherein the features extracted from the corresponding representative applications (26) comprise the determined properties.

7. Method in accordance with claim 6, wherein
the representative applications (26) are analysed by analysing the algorithm, the program code and/or the binary code of the corresponding representative application (26).

8. Method in accordance with one of the preceding claims, wherein
at least one of the plurality of representative applications (26) comprises at least two different configurations (42, 44), each configuration (42, 44) being **characterized by** at least one configuration parameter;
the corresponding representative application (26) is run on the training module at least two times, and
each time the corresponding representative application (26) is run on the training module, the corresponding representative application (26) is run with another configuration (42, 44).

9. Method in accordance with claim 8, comprising the step of
determining at least one of the configuration parameters of the configuration (42, 44) of each of the representative applications (26) by analysing the representative application (26), wherein the features extracted from the representative application (26) comprise the corresponding determined configuration parameters.

10. Method in accordance with one of the preceding claims, comprising the steps of:
providing at least one other training module configured for showing a behaviour as another corresponding electronic device;
running the plurality of representative applications (26) on the other training module
recording at least one value of at least one performance metric for each of the representative applications (26) when running on the other training module;
extracting at least one feature from the training module (20) and the other training module;
associating the extracted features, the corresponding recorded values of the performance metric and the corresponding performance metrics in the training dataset; and
providing the dataset for training and/or testing the machine learning model (20).

11. Method in accordance with one of the preceding claims, wherein the performance metric may comprise response times, CPU utilizations, and/or memory utilizations of the corresponding representative application (26).

12. Method for training a machine learning model (20) for predicting timing and/or resource requirements of an unknown application (52) running on an electronic device, the method comprising:
providing a training dataset for training and/or testing the machine learning model (20) in accordance with one of the preceding claims, the dataset comprising extracted features, recorded values of performance metrics and corresponding performance metrics associated with each other; and
training the machine learning model (20) by the dataset.

13. Method in accordance with claim 12, wherein
the extracted features are used as inputs for the training;
the performance metrics are used as labels for the training; and
the correspondingly recorded values of the features and the labels are used as teaching vector during the training.

14. Method in accordance with one of claims 12 or 13, wherein
the machine learning model (20) is a supervised machine learning model (20).

15. Method for predicting timing and/or resource requirements of an unknown application (52) running on an electronic device, the method comprising:
extracting at least one feature from the unknown application (52);
inputting the extracted feature in the machine learning model (20) trained in correspondence with one of claims 12 to 14; and
predicting the timing and/or resource requirements of the unknown application (52) by the machine learning model (20).

16. Usage of the machine learning model (20) trained in correspondence with one of claims 12 to 14 for predicting timing and/or resource requirements of an unknown application (52) running on an electronic device.

17. A computer program for providing a dataset for training and/or testing a machine learning model (20) for predicting timing and/or resource requirements of an unknown application (52) running on an electronic device, which computer program when being executed by a processor, is adapted for performing the method of one of claims 1 to 11.

18. A computer-readable medium in which a computer program according to claim 17 is stored.

19. A computer program for training a machine learning model (20) for predicting timing and/or resource requirements of an unknown application (52) running on an electronic device, which computer program when being executed by a processor, is adapted for performing the method of one of claims 12 to 14.

20. A computer-readable medium in which a computer program according to claim 19 is stored.

21. A computer program for predicting timing and/or resource requirements of an unknown application (52) running on an electronic device, which computer program when being executed by a processor, is adapted for performing the method of claim 14.

22. A computer-readable medium in which a computer program according to claim 20 is stored.
